# DEMANDE DE BREVET EUROPEEN

(11) **EP 1 793 144 A1**
(43) Date de publication de la demande: **06.06.2007**
(21) Numéro de dépôt: 06291874.3
(22) Date de dépôt: 04.12.2006
(51) Int. Cl.: F16J 9/00

(54) **Dispositif d'étanchéité pour piston pour monteur alternatif à combustion interne ou compresseur alternatif, et ensemble comprenant un tel piston**

(30) Priorité: 05.12.2005 FR 0512314; 07.12.2005 US 742880
(71) Demandeur: Melchior, Jean Frédéric, 75006 Paris (FR)
(72) Inventeur: Melchior, Jean Frédéric, 75006 Paris (FR)
(74) Mandataire: Ramey, Daniel

(57) **Abrégé**

Ce dispositif est prévu pour un piston (2) destiné à se déplacer en mouvement alternatif de translation rectiligne parallèlement à l'axe (A) d'une chambre (4) divisée par le piston en une enceinte haute pression (6) et une enceinte basse pression (8), et est du type comprenant :
- une surface de glissement (12) cylindrique circulaire délimitant la chambre (4) ;
- une gorge (24) torique ménagée sur le piston (2) coaxiale à la surface de glissement (12), ouverte vers la surface de glissement (12); et
- un anneau d'étanchéité (22) élastique, fermé, reçu de façon étanche dans la gorge (24), et est destiné à être en contact d'étanchéité avec la surface de glissement (12).

Selon un aspect de l'invention, l'anneau (22) est conçu pour calibrer un film d'huile de lubrification entre l'anneau (22) et la surface de glissement (12) à une épaisseur de lubrification limite lorsqu'il se déplace de l'enceinte haute pression vers l'enceinte basse pression, comprise de préférence entre 0.1 µm et 1 µm.

## Description

La présente invention concerne un dispositif d'étanchéité pour un piston prévu pour se déplacer en mouvement alternatif de translation rectiligne parallèlement à une direction dans une chambre divisée par le piston en une enceinte haute pression et une enceinte basse pression, du type comprenant :
- une surface de glissement cylindrique circulaire d'axe parallèle à la direction de translation du piston ;
- une gorge torique coaxiale à la surface de glissement, ouverte vers la surface de glissement ;
- l'un de la surface de glissement et de la gorge étant solidaire du piston, et l'autre de la chambre ; et
- un anneau d'étanchéité élastique, fermé, reçu de façon étanche dans la gorge, et en contact d'étanchéité avec la surface de glissement, par une portée d'étanchéité dont le périmètre à l'état libre est légèrement supérieur au périmètre de la surface de glissement solidaire de la chambre ou légèrement inférieur au périmètre de la surface de glissement solidaire du piston, de sorte que la surface de glissement impose à l'anneau une déformation élastique permanente de compression ou de tension qui provoque une pression d'appui sensiblement uniforme entre la portée et la surface de glissement quand l'anneau est serré élastiquement sur cette dernière.

Un grand nombre de machines utilisent des pistons, chacun en mouvement de translation alternatif dans une chambre, délimitée par une paroi, pour séparer la chambre en deux enceintes remplies de fluides à pressions différentes. On citera à titre indicatif et non limitatif les moteurs à combustion interne et les compresseurs alternatifs.

Pour résister aux forces de pression et à l'usure, la paroi de la chambre et le piston sont généralement métalliques.

La paroi de la chambre et le piston subissent des dilatations différentielles en fonction de leurs températures respectives. De plus, les contraintes dues à la pression des fluides génèrent des déformations élastiques de la paroi de la chambre et du piston. Ces déformations sont susceptibles de provoquer l'apparition de fuites entre le piston et la paroi.

Pour limiter les fuites, une solution consiste à intercaler, entre la paroi de la chambre et le piston, un joint déformable qui absorbe les variations de jeu en fonctionnement.

Dans les moteurs alternatifs, une solution consiste à utiliser un joint d'étanchéité ou « segment » métallique coupé (ou ouvert) retenu dans une gorge du piston, et en appui élastique sur une surface de glissement de la paroi de la chambre, généralement nommée « cylindre » dans les moteurs alternatifs.

Une étanchéité autoclave, résultant de la pression des gaz dans l'enceinte haute pression du cylindre, où s'effectue la combustion des gaz, est assurée, d'une part, par l'appui du segment sur une face située du côté de l'enceinte basse pression de la gorge du piston, et, d'autre part, par l'appui du segment sur la surface de glissement du cylindre.

Toutefois, l'étanchéité ainsi obtenue n'est pas satisfaisante. Il en résulte le passage d'un flux de gaz brûlés de l'enceinte haute pression, siège de la combustion dans les moteurs alternatifs, vers l'enceinte basse pression, en communication avec un carter du moteur formant réservoir d'huile de lubrification, qui pollue l'huile de lubrification. Ce flux échauffe par ailleurs la surface de glissement et le piston, et dépose des particules abrasives sur les surfaces en frottement. Par ailleurs, ce flux de gaz, qui entraîne la vapeur d'huile de lubrification présente dans le carter, doit être réaspiré par le moteur qui émet alors des particules d'huile brûlée.

Il en résulte les inconvénients suivants :
- consommation et pollution de l'huile de lubrification, qui rendent nécessaires des vidanges périodiques ;
- usure des organes lubrifiés et augmentation des pertes par frottement ;
- pollution atmosphérique par le passage de vapeurs d'huiles dans l'enceinte haute pression, et combustion de ces vapeurs d'huile ; et
- empoisonnement des catalyseurs et colmatage des filtres à particules par les additifs présents dans les vapeurs d'huile brûlées.

La coupe du segment est responsable d'une partie du défaut d'étanchéité.

Ce défaut d'étanchéité est aussi du au fait que l'étanchéité glissante entre le segment et la surface de glissement n'est pas suffisante.

En effet, il existe un jeu radial entre la portée du segment et la surface de glissement. Ce jeu est dû à la rigidité radiale du segment coupé, nécessaire pour maintenir un appui élastique du segment sur la surface de glissement en l'absence de pression gazeuse. Cette rigidité empêche le segment de se conformer à la géométrie de la surface de glissement. Les zones étanches se limitent à des secteurs de la circonférence du segment en appui sur la surface de glissement. Le reste de la circonférence du segment est le siège d'un passage de gaz, qui chauffe et pollue la surface de glissement, au risque de provoquer un frottement sec des zones de contact.

Pour éviter un grippage par frottement sec, une solution est de créer des stries hélicoïdales de réserve d'huile sur la surface de glissement, de préférence constituée de fonte, dont le carbone agit comme un lubrifiant solide.

Le document FR 2 602 827 décrit une bague d'étanchéité souple non coupée (fermée) montée avec serrage sur la surface de glissement d'un cylindre d'un moteur alternatif. Cette bague est conçue pour générer un film d'huile épais de portance hydrodynamique sur la surface de glissement, quand le piston se déplace.

Toutefois, cette bague s'est avérée peu efficace pour contrôler la consommation d'huile, et présente l'inconvénient d'avaler les particules abrasives qui dégradent les surfaces en contact.

L'invention a pour but de proposer un dispositif d'étanchéité entre un piston et une paroi d'une chambre, qui assure une étanchéité améliorée, tout en permettant une lubrification suffisante pour réduire l'usure.

A cet effet, l'invention propose un dispositif d'étanchéité du type précité, caractérisé en ce que l'anneau est ajusté dans la gorge de façon à interdire une déformation axiale de l'anneau, et à laisser libre un déplacement radial de l'anneau dans la gorge.

Ainsi, il est possible de mettre en compression élastique un anneau d'étanchéité de faible section méridienne qui lui confère une grande flexibilité dans toutes les directions. L'anneau d'étanchéité se conforme ainsi à la surface de glissement, de façon à assurer une étanchéité presque parfaite. Une déformation axiale de l'anneau d'étanchéité, qui annulerait la contrainte de compression de l'anneau, est empêchée par la gorge, dans laquelle l'anneau est ajusté de façon à ne pas pouvoir se déformer axialement.

La géométrie de l'anneau d'étanchéité se conforme ainsi à celle de la surface de glissement, avec une pression de contact sensiblement constante sur toute la périphérie. Cette pression dépend du serrage de l'anneau d'étanchéité sur la surface de glissement, de sa section méridienne et de l'étendue de la portée d'étanchéité. Si les déformations de la surface de glissement (ovalisations) pouvant apparaître au cours du fonctionnement, ne modifient pas le périmètre de contact entre la surface de glissement et la portée d'étanchéité, la pression spécifique et la contrainte dans l'anneau d'étanchéité sont constantes sur toute la course du piston. Si le périmètre de la surface de glissement varie sur la course du piston, la variation doit être suffisamment faible pour que l'anneau d'étanchéité travaille dans ses limites de fatigue, avec une pression minimale de contact suffisante pour assurer l'étanchéité.

De préférence, des moyens d'alimentation en huile de lubrification sont agencé pour alimenter en huile de lubrification toute la périphérie de l'anneau d'étanchéité du côté situé dans l'enceinte basse pression, et l'anneau d'étanchéité est prévu pour calibrer lors de sa course vers l'enceinte basse pression, un film d'huile de lubrification limite, d'épaisseur très faible, d'une fraction de micromètre. L'épaisseur du film est comprise notamment entre 0.1 et 1 micromètre, de préférence entre 0,1 et 0,5 micromètre

Ce film est calibré et déposé sur la partie de la surface de glissement située dans l'enceinte haute pression, par l'anneau d'étanchéité, lors du déplacement du piston de l'enceinte haute pression vers l'enceinte basse pression. L'épaisseur du film est juste suffisante pour que, pendant le déplacement du piston vers l'enceinte haute pression, l'anneau d'étanchéité glisse sur le film sans contact direct avec la surface de glissement, et insuffisante pour que l'anneau repousse de l'huile vers l'enceinte haute pression.

La surface de glissement retient la couche d'huile par les puissantes forces physico-chimiques de la lubrification limite. Il sera avantageux de traiter la surface pour améliorer l'adhérence du film.

La surface de glissement est de préférence dure et polie pour que ses reliefs soient inférieurs à l'épaisseur du film d'huile de lubrification. La surface de glissement est faite par exemple d'acier nitruré.

Dans un montage autoclave de l'anneau d'étanchéité, la pression des gaz s'ajoute à la pression résultant du serrage de l'anneau d'étanchéité sur la surface de glissement (ou « pression élastique »), pour appliquer l'anneau d'étanchéité sur la surface de glissement.

La pression élastique optimale dépend de la nature des matériaux de la surface de glissement et de l'anneau d'étanchéité, du lubrifiant, et de l'état des surfaces. De préférence, la pression élastique est comprise entre 20 et 100 bars.

L'épaisseur du film d'huile diminue avec la pression de contact de l'anneau d'étanchéité contre la surface de glissement. Un montage autoclave de l'anneau d'étanchéité conduit à former un film dont l'épaisseur décroît entre une partie basse pression de la surface de glissement, et une partie haute pression de la surface de glissement.

Pour réduire au minimum la consommation d'huile, on peut choisir une pression élastique suffisante pour étancher la pression maximale atteinte en fonctionnement dans l'enceinte haute pression, et réaliser un montage non autoclave. Cette pression de contact, qui détermine l'épaisseur du film, dépend de la pression à étancher, et ne dépend plus de la position du piston.

Une portée d'étanchéité cylindrique reliée par des angles vifs à des faces planes de raclage permet à l'anneau d'étanchéité de repousser les particules abrasives de dimensions supérieures à l'épaisseur du film vers l'enceinte haute pression (par exemple la chambre de combustion d'un moteur alternatif), et de racler l'huile vers l'enceinte basse pression (vers le carter du moteur).

L'angle vif de l'anneau d'étanchéité du côté de l'enceinte haute pression risque néanmoins de racler vers l'enceinte haute pression une partie du film, qui s'accumule dans ce cas sur la partie de l'anneau d'étanchéité exposée à l'enceinte haute pression. Une petite surface conique (angle au sommet de 2 degrés environ) ou bombée prolongeant la portée d'étanchéité jusqu'à l'angle vif côté haute pression (quelques dixièmes de millimètre), permet d'éviter les remontées d'huile, et de repousser les particules abrasives.

Lorsque la surface de glissement est solidaire de la chambre, pour obtenir une bonne conformabilité géométrique, et limiter les tolérances du serrage, il faut faire travailler l'anneau d'étanchéité sous la plus grande contrainte de compression compatible avec ses limites de fatigue et de flambage.

Le flambage axial est empêché par la gorge qui interdit une déformation axiale de l'anneau. Le flambage radial vers l'extérieur est empêché par l'appui sur la surface de glissement. La limite de flambage radial vers l'intérieur est repoussée par le rayon de courbure imposé à l'anneau d'étanchéité par la surface de glissement.

Pour éviter le flambage de l'anneau élastique radialement vers l'intérieur, il est possible de placer un joint torique en matériau élastomère entre l'anneau d'étanchéité et le fond de la gorge. Le joint repousse la limite de flambage en garantissant l'étanchéité statique entre l'anneau d'étanchéité et le piston. L'appui autoclave du segment sur la face côté basse pression de la gorge empêche le fluage de l'élastomère. La présence d'huile incompressible autour du joint torique limite les déformations cycliques susceptibles de détruire le joint par échauffement. Un joint de profil adapté peut aussi remplir l'angle entre une face de l'anneau d'étanchéité en vis-à-vis du fond de la gorge, et une face d'appui côté basse pression de la gorge, et sur laquelle l'anneau d'étanchéité est en appui. Le joint en élastomère incompressible suit alors les petits glissements radiaux de l'anneau d'étanchéité sans se déformer.

Avantageusement, un piston selon l'invention est muni d'un seul anneau d'étanchéité.

Pour fonctionner correctement, l'anneau d'étanchéité doit pouvoir se translater parallèlement à l'axe de la surface de glissement, sans basculement, ni torsion. De plus les déplacements radiaux de l'anneau d'étanchéité à l'intérieur de la gorge doivent être aussi faibles que possible. La distance entre le bord de la face d'appui de la gorge, située du côté basse pression et contre laquelle l'anneau d'étanchéité est en appui, et la surface de glissement, doit aussi être minimale. Pour toutes ces raisons le jeu de guidage du piston dans le cylindre doit être minimal en choisissant un coefficient de dilatation du piston voisin de celui du cylindre et en limitant la différence de température entre la partie guidée du piston et le cylindre.

Pour ce faire l'invention prévoit de séparer la tête de piston chaude, qui comporte un bol de combustion, faite d'alliage léger très conducteur de la chaleur, et le corps de piston, froid, qui porte une jupe de guidage faite d'acier ou de fonte.

L'étanchéité améliorée du piston permet de retenir une masse gazeuse non renouvelée dans le jeu entre la surface de glissement et le piston, du côté de l'anneau d'étanchéité exposé à l'enceinte haute pression. En fonctionnement, cette masse gazeuse échange de la chaleur avec la surface de glissement jusqu'à égaliser sa température moyenne à celle de cette dernière. L'anneau d'étanchéité selon l'invention assure ainsi une bonne protection thermique du corps de piston et de la surface de glissement, qui permet éventuellement d'éliminer le refroidissement par eau à l'extérieure de la chambre, et de le remplacer par un refroidissement par huile de la surface de glissement et du corps du piston. Ce refroidissement peut être assuré par un anneau d'huile en contact avec la surface de glissement, et entraîné par le piston pour augmenter le coefficient d'échange thermique et uniformiser la température de la surface de glissement.

Le piston comporte avantageusement deux patins de guidage annulaires de faible épaisseur radiale (1% à 3% du diamètre de la surface de glissement), espacés axialement, et dont le profil favorise la formation d'un coin d'huile hydrodynamique par un jeu de fonctionnement réduit et des entrées d'huile coniques. L'anneau d'huile de refroidissement peut alors être situé entre les patins de guidage et alimenter le film d'huile. L'anneau d'huile peut être alimenté par un jet d'huile fraîche pour refroidir la surface de glissement et le corps du piston, et se vider contre la surface de la tête de piston pour refroidir la chambre de combustion.

Ainsi, selon d'autres modes de réalisation, le dispositif d'étanchéité comprend une ou plusieurs des caractéristiques suivantes, prises isolément ou selon toutes les combinaisons techniquement possibles :
- la gorge est délimitée axialement par deux surfaces de contact avec l'anneau, de forme générale plane, perpendiculaires à l'axe de la surface de glissement, la distance axiale entre les deux surfaces de contact étant juste suffisante pour interdire une déformation axiale de l'anneau, et laisser libre un déplacement radial de l'anneau dans la gorge,
- l'épaisseur radiale de l'anneau est comprise entre 2% et 5% du diamètre de la surface de glissement solidaire de la chambre,
- le rapport entre, d'une part, la différence entre le périmètre de la portée de l'anneau à l'état libre et le périmètre de la surface de glissement, et, d'autre part, le périmètre de la surface de glissement est compris entre 1/1000 et 4/1000,
- l'anneau est conçu pour calibrer un film d'huile de lubrification entre l'anneau et la surface de glissement à une épaisseur de lubrification limite, comprise de préférence entre 0.1 µm et 0.5 µm,
- le dispositif comprend des moyens pour amener de l'huile de lubrification sur toute la périphérie d'un bord de la portée de l'anneau, situé du côté de l'enceinte basse pression,
- la portée de l'anneau est cylindrique,
- la dimension axiale de la portée de l'anneau est comprise entre 0,5 et 5 millimètres,
- le rapport de la dimension axiale de la portée de l'anneau au diamètre de la surface de glissement est compris entre 1/100 et 3/100,
- l'anneau comprend une surface de raclage de la couche d'huile recouvrant la partie de la surface de glissement située dans l'enceinte basse pression, cette surface rejoignant la portée de l'anneau en formant une arête vive côté basse pression limitant la portée du côté de l'enceinte basse pression, avec un angle côté basse pression compris entre 45 et 90° avec ledit axe, de façon à laisser un film d'huile de lubrification limite d'une épaisseur d'une fraction de micromètre sur la partie de la surface de glissement située dans l'enceinte haute pression,
- la surface de glissement est polie pour faire disparaître tout relief supérieur à l'épaisseur du film d'huile de lubrification limite,
- la portée de l'anneau est prolongée du coté de l'enceinte haute pression par un tronçon qui s'écarte progressivement de la surface de glissement jusqu'à une arête vive côté haute pression limitant le tronçon du côté de l'enceinte haute pression, formée avec une surface de l'anneau de raclage des particules, ladite arête vive étant éloignée d'une fraction de micromètre de la surface de glissement,
- l'anneau comprend une face de forme générale plane perpendiculaire à l'axe de la surface de glissement, en contact avec la face de forme générale plane de la gorge située du coté de l'enceinte basse pression,
- le dispositif comprend un joint torique en matériau élastomère en contact permanent avec le fond de la gorge, avec la face de l'anneau en vis-à-vis du fond de la gorge, et avec une face de forme générale plane de la gorge située du côté de l'enceinte basse pression,
- il comprend un joint torique en matériau élastomère, solidaire de l'anneau, qui occupe la totalité de l'angle formé par la face de l'anneau en vis-à-vis avec le fond de la gorge et la face de forme générale plane de la gorge située du coté de l'enceinte basse pression,
- il comprend un anneau auxiliaire élastique maintenu en contact étanche avec une face d'étanchéité plane de l'anneau d'étanchéité, perpendiculaire à l'axe de la surface de glissement, située du côté de l'enceinte haute pression, du fait de son serrage contre une surface d'étanchéité de la gorge sensiblement conique, ouverte vers l'enceinte haute pression,
- l'anneau auxiliaire est en contact avec l'anneau d'étanchéité dans un plan perpendiculaire à l'axe de la surface de glissement, situé dans le plan ou du côté basse pression d'un bord de la portée de l'anneau d'étanchéité situé du côté de l'enceinte haute pression.

L'invention concerne également un ensemble pour moteur ou compresseur alternatif, comprenant au moins une chambre, un piston prévu pour se déplacer en mouvement alternatif de translation rectiligne parallèlement a une direction dans la chambre, et divisant la chambre en une enceinte haute pression et une enceinte basse pression, l'ensemble comportant un dispositif d'étanchéité tel que défini ci-dessus.

Dans un mode de réalisation, le piston délimite, dans l'enceinte haute pression, un espace annulaire situé radialement entre le piston et la surface de glissement, et axialement entre l'anneau d'étanchéité et l'extrémité axiale du piston, ledit espace possédant un volume suffisant pour qu'une masse de gaz contenue dans ledit espace à une pression minimale du cycle dans l'enceinte haute pression occupe un volume suffisant pour immerger totalement la partie de l'anneau d'étanchéité exposée à la haute pression lorsque la dite masse de gaz est comprimée à la pression maximale du cycle dans l'enceinte haute pression.

Dans un mode de réalisation, le piston comporte au moins un patin de guidage annulaire et fermé, délimitant axialement avec l'anneau d'étanchéité, et radialement avec la surface de glissement, un espace annulaire fermé communiquant avec des moyens d'alimentation en huile fraîche, et s'évacuant dans un circuit de refroidissement du piston débouchant dans l'enceinte basse pression.

Dans un mode de réalisation la surface de glissement est uniquement refroidie par une réserve d'huile fraîche portée par le piston dans l'espace formé entre le patin et l'anneau d'étanchéité.

L'invention et ses avantages seront mieux compris à la lecture de la description qui va suivre, donnée uniquement à titre d'exemple, et faite en référence aux dessins annexés, sur lesquels :
- la figure 1 est une vue schématique en demi-coupe axiale d'un piston d'un moteur à combustion interne possédant un dispositif d'étanchéité conforme à l'invention disposé entre le piston et une chambre dans laquelle le piston est mobile ;
- la figure 2 est une vue agrandie de la zone II de la figure 1 ;
- la figure 3 est une vue schématique en perspective d'un anneau d'étanchéité du dispositif d'étanchéité de la figure 1 ;
- la figure 4 est une vue agrandie de la zone IV de la figure 1 ;
- la figure 5 est une vue de détail de celle de la figure 2 ; et
- les figures 6 à 9 sont des vues analogues à celle de la figure 2, illustrant des dispositifs d'étanchéité conformes à l'invention selon des variantes.

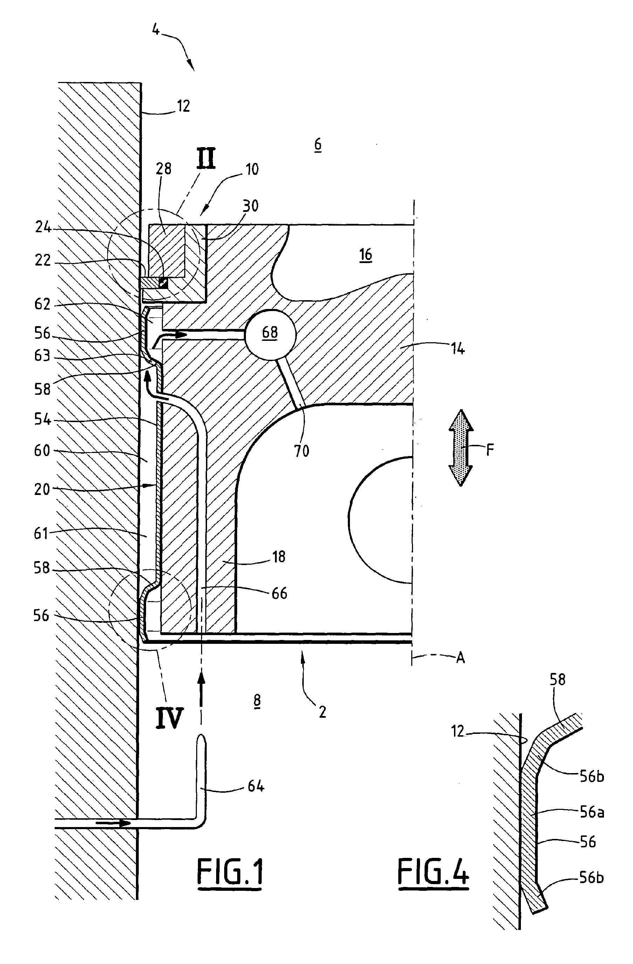

Tel que représenté sur la figure 1, le piston 2 est monté mobile dans la chambre 4 du moteur à combustion interne, en translation rectiligne alternative (Flèche F) selon un axe A.

Le piston 2 sépare la chambre 4, de façon étanche, en, d'une part, une enceinte supérieure haute pression 6, prévue pour recevoir, de façon connue en soi, l'air et le carburant en vue de leur combustion, et, d'autre part, une enceinte inférieure basse pression 8, prévue pour être en communication avec un carter contenant une réserve d'huile de lubrification du moteur.

Un dispositif d'étanchéité 10 est disposé entre le piston 2 et une surface de glissement 12 délimitant en partie la chambre 4. La surface 12 est cylindrique circulaire d'axe A.

Le piston 2 comprend un corps 14 dans lequel est ménagé un bol de combustion 16 s'ouvrant vers l'enceinte 6, une jupe 18 s'étendant axialement à partir du corps 14 vers l'enceinte 8, et une chemise 20 tubulaire de guidage du piston 2 le long de la surface 12, solidarisée sur la surface extérieure de la jupe 18.

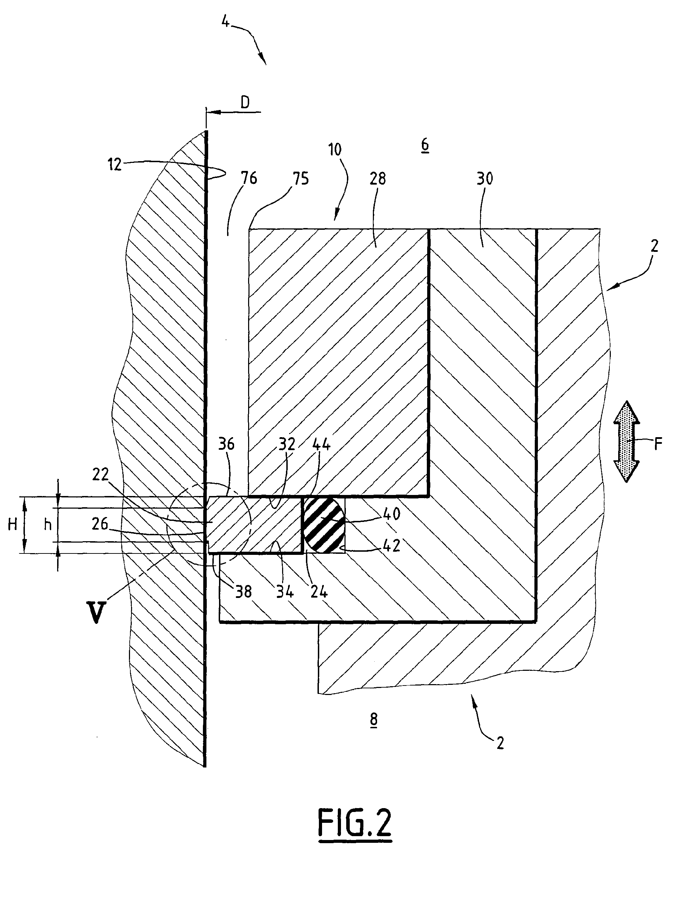

Tel que représenté sur la figure 2, le dispositif d'étanchéité 10 comprend un anneau d'étanchéité 22 métallique, distinct du piston 2 et de la chambre 4, et ajusté dans une gorge 24 solidaire du piston 2, ouverte vers la surface 12. L'anneau 22 se déplace avec le piston 2, et est en appui par une portée cylindrique 26 d'axe A contre la surface 12.

L'anneau 22 est reçu de façon étanche dans la gorge 24, et, lors du déplacement du piston 2 (Flèche F), la portée 26 est en contact étanche avec la surface 12 et glisse le long de celle-ci.

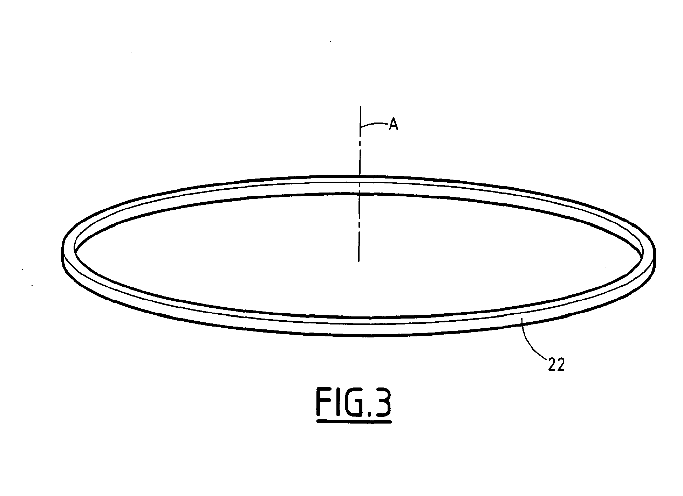

Tel que représenté sur la figure 3, l'anneau 22 est fermé, c'est-à-dire qu'il est continu sur sa circonférence, et qu'il n'est pas coupé ou fendu en un endroit de sa circonférence.

La section méridienne de l'anneau 22 est uniforme sur toute sa circonférence. Il est donc symétrique de révolution autour de l'axe A.

Sur la figure 2, la gorge 24 est formée entre deux bagues 28 et 30. La bague 28 est frettée sur la bague 30, elle-même frettée sur le piston 2.

La gorge 24 est délimitée axialement par deux faces de contact avec l'anneau 22 : une face côté haute pression 32, ménagée sur la bague 28, et une face côté basse pression 34, ménagée sur la bague 30. Chacune des faces 32 et 34 est de forme générale plane, et s'étend dans un plan perpendiculaire à l'axe A.

L'anneau 22 comprend une face côté haute pression 36 exposée à la pression de l'enceinte 6, et une face côté basse pression 38 exposée à la pression de l'enceinte 8. Chacune des faces 36 et 38 est de forme générale plane, et s'étend dans un plan perpendiculaire à l'axe A.

Les faces 36 et 38 sont en vis-à-vis respectivement des faces 32 et 34, en vue d'un contact avec ces faces 32 et 34.

La distance axiale H entre les faces 32 et 34 est sensiblement égale mais supérieure à la distance axiale entre les faces 36 et 38, de façon que la distance H est juste suffisante pour permettre le déplacement radiale de l'anneau 22 dans la gorge 24 en interdisant toute déformation axiale de l'anneau 22. En d'autres termes, l'anneau 22 est ajusté axialement dans la gorge 24.

La gorge 24 est suffisamment profonde radialement pour permettre le débattement radial de l'anneau 22 dans la gorge 24.

Un joint torique 40 en matériau élastomère est disposé entre le fond 42 de la gorge 24, s'étendant axialement entre les faces 32 et 34, et une face 44 de l'anneau 22 située en vis-à-vis. Le joint 40 est en appui sur la face 34.

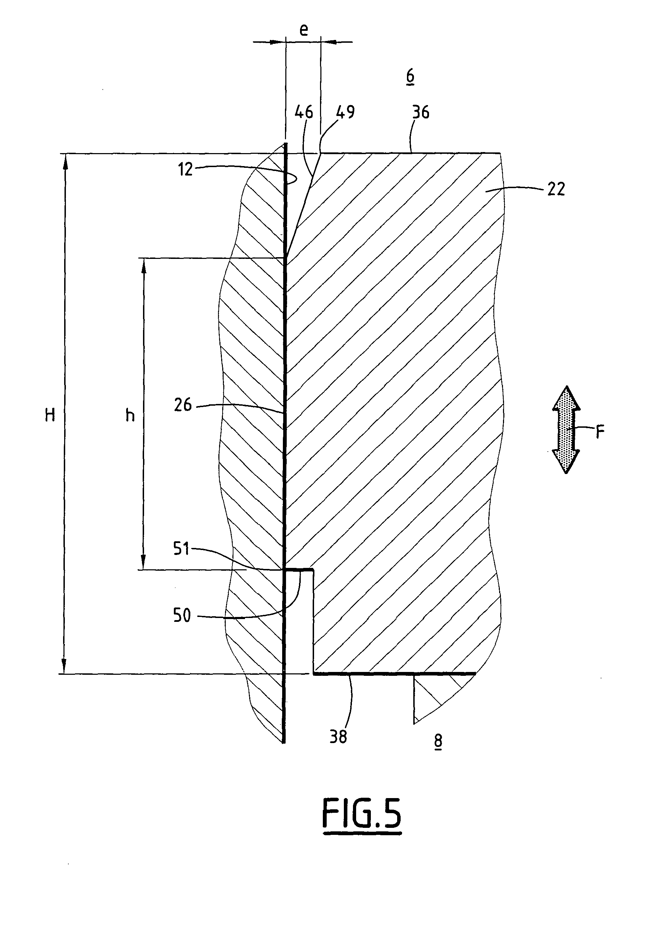

Tel que représenté sur la figure 5, la portée 26 est prolongée, du côté de l'enceinte 6, par un tronçon tronconique 46 d'axe A s'éloignant progressivement de la surface 12, et rejoignant la face 36 en formant une arête vive 49 limitant le tronçon 46 du côté de l'enceinte 6. La distance radiale e entre l'arête 49 et la surface 12, autrement dit la distance radiale entre la portée 26 et l'arête 49, est de l'ordre d'une fraction de micromètre.

La portée 26 est limitée du côté de l'enceinte 8 par une arête vive côté basse pression 51, formée avec une surface de raclage 50 rejoignant la portée 26 en formant, avec l'axe A, un angle θ compris entre 45 et 90° (90° sur la figure 5).

La surface 50 est décalée axialement par rapport à la surface 38, et rejoint celle-ci par une surface cylindrique 52 d'axe A.

Pour assurer un appui équilibré de la portée 26 sur la surface 12, la portée 26 est sensiblement centrée sur le plan équatorial médian de l'anneau 22, situé à mi-distance entre les faces 36 et 38, et la dimension axiale de la surface 46 est égale à la distance axiale entre la surface 50 et la face 38.

L'anneau 22 est serré sur la surface 12. A cet effet, à l'état libre, le périmètre de la portée 26 est supérieur au périmètre de la surface 12. L'anneau 22 est donc déformé élastiquement en compression lorsqu'il est forcé dans la surface 12.

L'anneau 22 possède une section méridienne faible, de sorte que l'anneau 22 est très souple et se conforme facilement à la géométrie de la surface 12, y compris en cas de variations des dimensions de la surface 12 dues à des variations de température ou de pression à l'intérieur de la chambre 4.

L'anneau 22 étant fermé et de section uniforme, il maintient une pression spécifique de contact entre la portée 26 et la surface 12 sensiblement uniforme sur la circonférence de l'anneau 22.

L'anneau 22 est dimensionné pour travailler dans sa limite élastique, et dans ses limites de fatigue.

La hauteur axiale h de la portée 6 est comprise de préférence entre 0,5 et 5 mm. Ceci permet de limiter les frottements entre la portée 26 et la surface 12, qui sont proportionnels à cette hauteur h, et de limiter l'aire de la portée 26 de façon à conserver une pression spécifique de contact importante entre la portée 26 et la surface 12, malgré la souplesse de l'anneau 22.

Pour obtenir un anneau 22 souple qui ne flambe pas, de préférence l'épaisseur radiale E est comprise entre 1% et 5% du diamètre D de la surface 12, de préférence entre 2% et 5%, encore de préférence entre 2% et 3%.

Par ailleurs, de préférence, le rapport entre, d'une part, la différence entre le périmètre de la portée 26 de l'anneau 22 à l'état libre et le périmètre de la surface 12, et d'autre part, le périmètre de la surface 12, est compris entre 1/1000 et 4/1000, afin de rester dans la plage de déformation élastique, fonction de la valeur du module d'Young du matériau constituant l'anneau 22.

En outre, de préférence, le rapport de la hauteur h au diamètre de la surface 12 est compris entre 2/1000 et 3/100, notamment entre 1/100 et 3/100.

Dans un exemple de réalisation, le diamètre D est sensiblement égal à 75 mm, l'épaisseur E est égale à 1,5 mm et la hauteur H est sensiblement égal à 1 mm.

L'ajustement axial de l'anneau 22 dans la gorge 24 évite toute déformation axiale de l'anneau 22 pouvant entraîner des fuites entre l'anneau 22 et la gorge 24, et une pression non uniforme de la portée 26 sur la surface 12.

En revenant à la figure 1, la chemise 20 comprend un tronçon central 54 solidaire de la jupe 18, prolongé à chacune de ses extrémités axiale par un patin d'appui 56, de diamètre supérieur à celui du tronçon 54 et espacé de la jupe 18, et relié au tronçon 54 par une portion de liaison tronconique 58 élastique.

Chaque patin 56 est fermé, c'est-à-dire continu circonférentiellement, pour un guidage amélioré.

Le piston 2 délimite avec la surface 12, un espace annulaire 60 fermé axialement par le patin 56 inférieur, situé du côté de l'enceinte 8, et l'anneau 22.

Les patins 56 ont une fonction de guidage radial du piston 2 le long de la surface 12, et non une fonction d'étanchéité. Néanmoins, les patins 56 sont guidés par la surface 12 avec un jeu radial aussi réduit que possible, permettant d'assurer une portance sur un film d'huile hydrodynamique.

Chaque patin 56 est conçu pour la formation d'un film d'huile hydrodynamique entre le patin 56 et la surface 12. A cet effet, tel que représenté sur la figure 4, chaque patin 56 possède un profil comprenant un tronçon central cylindrique 56a, et, à chaque extrémité du tronçon 56a, un tronçon tronconique 56b s'écartant de la surface 12 avec un angle de 2° environ, pour définir avec celle un cône d'entrée d'huile entre le tronçon 56a et la surface 12.

Le patin 56 supérieur, situé du côté de l'enceinte 6, divise l'espace 60 en un sous-espace 61 inférieur délimité avec le patin 56 inférieure, et un sous-espace supérieur 62, délimité avec l'anneau 22, communiquant avec le sous-espace 61 par l'intermédiaire d'orifices 63 ménagés dans la portion 58 supérieure.

Une buse 64 d'alimentation en huile fraîche, alimentée de façon connue à partir du carter du moteur, est dirigée de façon à propulser, en permanence, un jet d'huile fraîche à l'intérieur d'un canal 66 ménagé dans la jupe 18, et possédant une entrée en regard de la buse 64, et une sortie débouchant dans le sous-espace 61.

Le piston 2 comprend une galerie 68 de refroidissement du corps 14, s'alimentant dans l'espace 62, et débouchant par un canal d'évacuation 70 dans l'enceinte 8.

En fonctionnement, l'huile fraîche projetée par la buse 64 arrive dans l'espace 60, où se forme une réserve d'huile, qui refroidit la surface 12, alimente le film de lubrification limite entre l'anneau 22 et la surface 12, et le film d'huile de lubrification hydrodynamique entre la surface 12 et chacun des patins 56.

Le film hydrodynamique remplit le jeu radial entre les patins 56 et la surface de glissement, jeu voisin de 2/10 000 du diamètre D de la surface 12.

L'huile débouche dans le sous-espace 61, et s'écoule dans le sous-espace 62 par les orifices 63, de façon à alimenter le film d'huile de lubrification limite entre l'anneau 22 et la surface 12. Le sous-espace 62 permet d'alimenter l'huile sur toute la circonférence du bord basse pression de la portée 26, constitué par l'arête 51.

L'alimentation de l'anneau 22 en huile est sensiblement permanente et continue, étant donné que le sous-espace 61, alimenté par intermittence du fait du déplacement du piston 2 par rapport à la buse 64, forme une réserve tampon alimentant le sous-espace 62 par effet shaker.

L'huile s'écoule de l'espace 62 dans la galerie 68, de façon à refroidir le corps 14, et retourne ensuite vers l'enceinte 8 par le canal 70.

La réserve d'huile dans l'espace 60 se déplace avec le piston 2, et refroidit la surface 12. Avantageusement, la surface 12 est refroidie uniquement par cette huile, sans refroidissement extérieur par eau, ce qui simplifie le moteur et réduit son coût de fabrication.

En se référant à la figure 5, lors du déplacement de l'anneau 22 de l'enceinte 6 vers l'enceinte 8, la surface 50 racle la couche d'huile située dans l'espace 62, sur la surface 12, de façon à calibrer l'épaisseur du film de lubrification limite déposé sur la partie de la surface 12 située dans l'enceinte 6.

Le film de lubrification limite couvre à chaque instant la partie de la surface 12 située dans l'enceinte 6 entre la position actuelle de l'arrête 51 et la position de cette dernière au point mort haut du piston.

Le film de lubrification limite présente une épaisseur d'une fraction de micromètre, c'est-à-dire inférieure à 1 µm, comprise de préférence entre 0,1 µm ou 0,2 µm et 1 µm, et encore de préférence entre 0,1 µm et 0,5 µm.

Une telle épaisseur de film d'huile est inférieure à l'épaisseur d'un film hydrodynamique généralement comprise entre 5 et 10 micromètres.

Dans la lubrification hydrodynamique, le film comprend plusieurs couches de molécules qui glissent les unes sur les autres, alors que dans la lubrification limite, le film comprend sensiblement une seule couche de molécules, retenues sur la surface de glissement par les forces physico-chimiques, et permettant un contact glissant entre les surface entre lesquelles le film de lubrification limite est formé.

Le film de lubrification limite est suffisant pour assurer le glissement de la portée 26 sur la surface 12 avec des frottements limités, tout en assurant une étanchéité efficace, interdisant le passage de gaz entre la portée 26 et la surface 12.

L'arête 51 associée à la forte pression d'appui évite l'apparition d'un film hydrodynamique entre la portée 26 et la surface 12.

L'épaisseur du film de lubrification limite dépend de la pression spécifique de contact entre la portée 26 et la surface 12. De préférence, cette pression est comprise entre 20 et 100 bars pour calibrer le film de lubrification limite.

La pression de contact est la somme d'une pression « élastique » résultant du serrage de l'anneau 22 sur la surface 12, et d'une pression due au gaz de l'enceinte 6. En effet, en se référant à la figure 2, le montage de l'anneau 22 est du type autoclave car les gaz peuvent pénétrer dans la gorge 24. Ainsi, l'anneau 22 est plaqué axialement par les gaz de l'enceinte 6 en appui étanche contre la face 34, et radialement, par les gaz de l'enceinte 6 présents dans la gorge 24, contre la surface 12.

Le débattement radial entre l'anneau 22 et la gorge 24 permet d'absorber des dilatations différentielles entre le piston 2 et la surface 12, ou des déplacements radiaux du piston 2 par rapport à la surface 12, par exemple lors du basculement du piston 2 au point mort haut ou au point mort bas.

Lorsque l'anneau 22 se déplace de l'enceinte 8 vers l'enceinte 6, la distance e est suffisamment faible pour empêcher le passage de particules abrasives entre la surface 12 et la portée 26. De telles particules sont repoussées par la surface 36 formant alors surface de raclage.

L'étanchéité améliorée fournie par l'anneau 22 permet de ne disposer, entre le piston 2 et la surface 12, qu'un seul anneau qui assure l'étanchéité et le raclage de l'huile, ce qui est avantageux, en particulier dans les moteurs à combustion interne, dont les dispositifs d'étanchéité comprennent généralement trois segments.

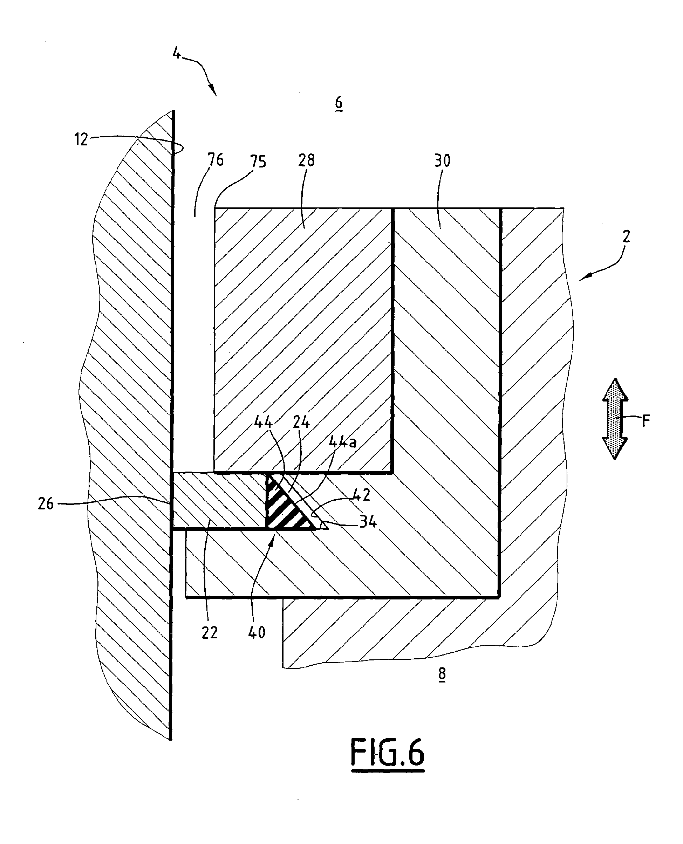

Dans la variante de la figure 6, le dispositif 10 diffère de la variante précédente par la forme du joint 40, qui présente une section triangulaire, et est disposé dans l'angle entre la face 44 et la face 34. Du fait du montage autoclave de l'anneau 22, le joint 40 est plaqué par les gaz de l'enceinte 6 contre les faces 44 et 34, ce qui assure une bonne étanchéité.

De façon avantageuse, le joint 40 est collé sur la face 44 de l'anneau 22, de façon à être solidaire de celui-ci.

Le joint 40 se termine à distance radialement du fond 42 de la gorge 24 pour ne pas entraver le débattement radial de l'anneau 22 dans la gorge 24.

Pour limiter le volume libre de la gorge 24, le fond 42 est incliné sensiblement parallèlement à une face arrière 44a du joint 44.

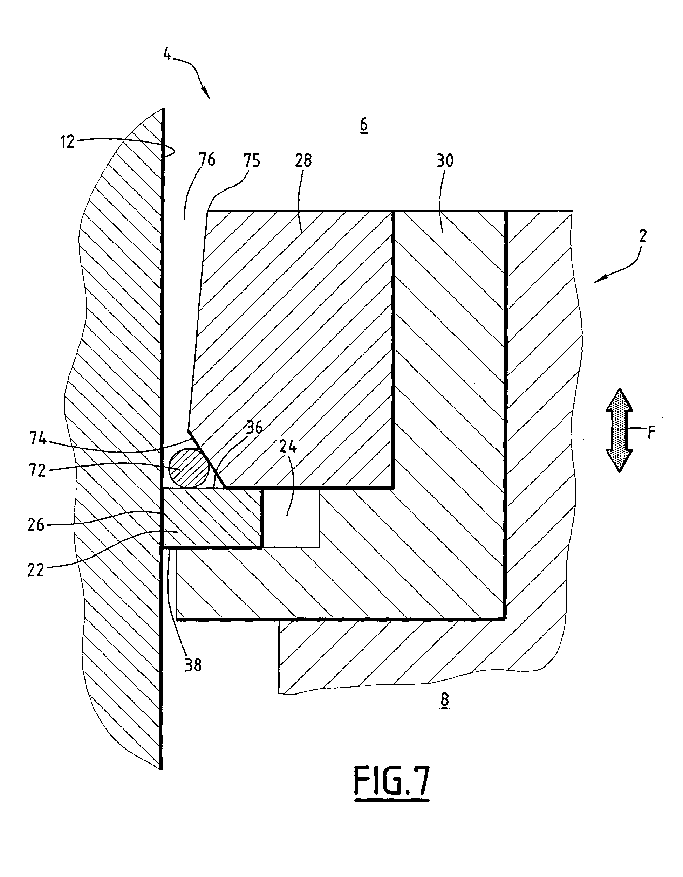

Dans la variante de la figure 7, le dispositif 10 diffère des variantes précédentes en ce que l'anneau 22 est monté de façon non autoclave et que l'étanchéité entre l'anneau 22 et la gorge 24 est assurée par des contacts métallique sans faire appel à des matériaux élastomères.

Le dispositif 10 comprend un anneau auxiliaire d'étanchéité 72 métallique disposé axialement entre la face 36 et une surface tronconique 74 d'axe A de la bague 28, s'évasant vers l'enceinte 6.

L'anneau 72 est pressé contre la face 36 de l'anneau 22 par son serrage élastique contre la surface 74 conique. Il en résulte que l'anneau 72 est maintenu en tension, et s'appuie en contact étanche contre la surface 74 et contre la face 36, ce qui constitue une étanchéité statique autoclave vers la gorge 24, qui peut être alimentée en huile à la pression de l'enceinte 8.

Dans ce cas, la pression spécifique de contact entre la portée 26 et la surface 12 dépend seulement de la pression élastique.

L'anneau 72 est en contact avec l'anneau 22 dans un plan perpendiculaire à l'axe A, situé dans le plan ou du côté basse pression d'un bord de la portée 26 situé du côté de l'enceinte haute pression 6, afin d'éviter un fonctionnement anti autoclave de l'anneau 22.

Dans toutes les variantes, de préférence, un volume d'un espace 76 annulaire, délimité entre le piston 2 et la surface 12, et axialement entre l'anneau 22 et l'extrémité axiale 75 du piston 2 située du côté de l'enceinte 6, est suffisamment important pour que la masse de gaz remplissant cet espace 76 à la pression minimale atteinte dans l'enceinte 6 pendant le cycle, possède un volume suffisamment grand pour immerger l'anneau 22 du côté exposé à l'enceinte 6 lorsque cette masse de gaz est comprimée à la pression maximale atteinte dans l'enceinte 6 pendant le cycle.

Ainsi, du fait du bon niveau d'étanchéité du dispositif, cette masse de gaz se trouve emprisonnée, lors du cycle du piston 2, dans cet espace 76, et n'est pas renouvelée. Il en résulte que cette masse de gaz, alternativement comprimée et détendue au contact de la surface 12 avec laquelle elle échange de la chaleur grâce à la vitesse élevée du piston 2, atteint, au bout d'un certain temps, une température moyenne voisine de celle de la surface 12 beaucoup plus basse que la température moyenne des gaz présents dans l'enceinte 6.

Cette masse gazeuse relativement froide alimente à chaque course du piston 2 vers l'enceinte 8 la couche limite gazeuse qui recouvre le film d'huile déposé sur la surface 12 en limitant le flux de chaleur vers la surface 12.

Dans les variantes illustrées sur les figures 1 à 7, la surface 12 est solidaire de la chambre 4, et la gorge 24 est solidaire du piston 22.

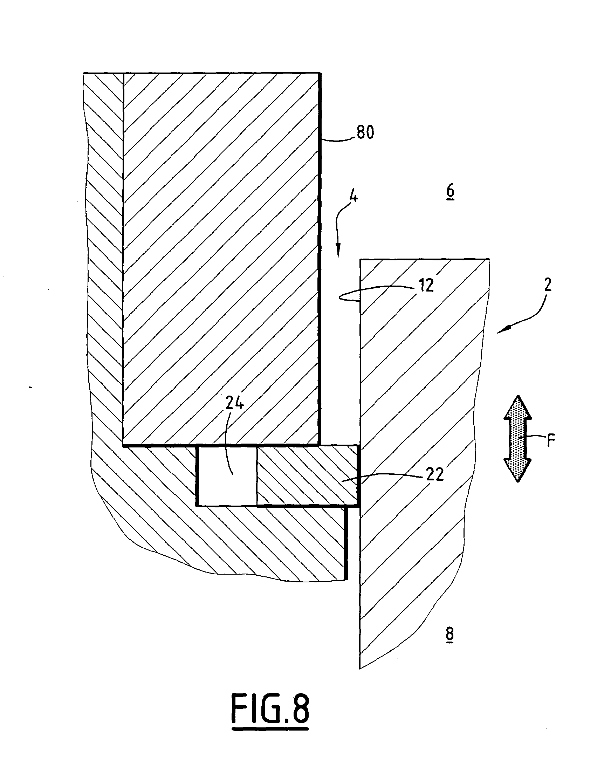

Dans une variante illustrée sur la figure 8, la surface 12 est prévue sur le piston 2, et l'anneau 22 est reçu dans une gorge 24 ménagée dans une paroi 80 de la chambre 4, de façon que l'anneau 22 est reçu de façon étanche contre la paroi 80, et assure l'étanchéité avec le piston 2 en déplacement.

Dans ce cas, l'anneau 22 est serré sur la surface de glissement, et déformé élastiquement en tension. L'anneau 22 ne risque pas de flamber.

Dans toutes les variantes, la force d'application radiale de l'anneau contre la surface de glissement 12 est proportionnelle à l'aire de la portée 26 d'étanchéité et à la pression de contact entre la surface 12 et la portée 26.

Dans un montage autoclave (figure 1 à 6), la pression de contact est la somme de la pression élastique résultant du serrage de l'anneau 22 sur la surface 12 et et de la pression des gaz dans l'enceinte 6 (et éventuellement la pression due à la déformation radiale d'un joint torique interposé entre l'anneau et le fond de la gorge).

Dans un moteur alternatif à combustion interne ou un compresseur alternatif, l'enceinte 6 est remplie de gaz à une pression variable, entre une pression maximale Pmax correspondant au point mort haut du piston 2 et une pression minimale Pmin correspondant au point mort bas du piston 2.

Au point mort bas, la pression de contact est sensiblement égale à la pression élastique et doit être suffisante pour calibrer le film d'huile. La pression élastique est comprise de préférence entre 20 et 100 bars.

Au point mort haut, la pression de contact ne doit pas être excessive. Dans un moteur Diesel, avec une pression élastique entre 20 et 100 bars, la pression de contact au moint mort haut sera typiquement de l'ordre de 200 à 280 bars.

En outre, du fait que la pression de contact varie entre le point mort haut et le point mort bas, l'épaisseur du film de lubrification limite varie le long de la surface de glissement. L'épaisseur du film de lubrification limite augmente de l'enceinte 6 vers l'enceinte 8.

Dans un montage non autoclave (figure 7), la pression de contact est sensiblement constante et égale à la pression élastique, puisqu'elle ne dépend pas de la pression des gaz dans l'enceinte 6.

Ainsi, un montage non autoclave favorise la réduction des pertes par frottement et l'uniformité de l'épaisseur du film de lubrification limite.

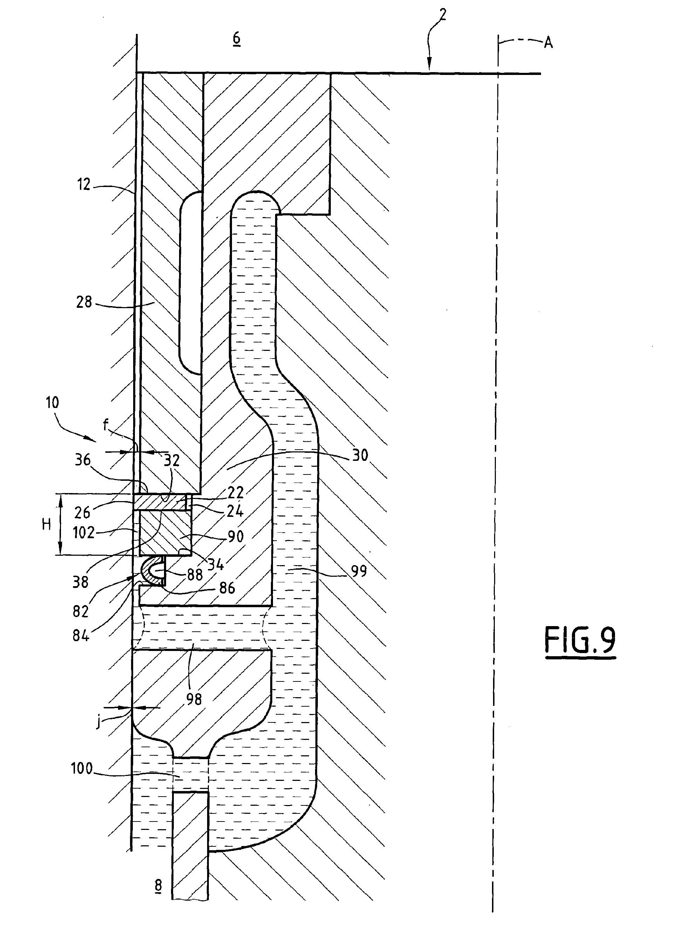

La figure 9 illustre un autre mode de réalisation d'un montage non autoclave de l'anneau 22.

Le mode de réalisation de la figure 9, où les références aux éléments semblables à ceux des figures 1 à 7 ont été conservées, diffère de celui de la figure 2 en ce qu'il comprend des moyens élastiques 82 formant ressort axial, disposés entre une surface radiale d'appui 84 du piston 2 et la face 38 de l'anneau 22 de façon à solliciter l'anneau 22 axialement en appui par sa face 36 contre la face 32.

Comme précédemment, l'anneau 22 est toujours adapté pour calibrer un film de lubrification limite entre sa portée 26 et la surface de glissement 12. Ainsi, l'épaisseur radiale de l'anneau 22 est choisie en fonction du matériau constituant l'anneau 22, de façon à obtenir une pression élastique suffisante, de préférence entre 20 et 100 bars.

Dans ce montage, un contact intime s'établiera entre les faces 32 et 36 pour assurer l'étanchéité au gaz entre ces faces 32 et 36.

Les moyens élastiques sont prévus par exemple sous la forme d'un anneau 86 élastique axialement, possédant une section en C ouverte radialement vers l'intérieur, possédant une branche en appui sur la surface 84 et une branche en appui sur l'anneau 22.

La surface 84 est par exemple une surface radiale d'un dégagement annulaire périphérique 88 ménagé dans la face 34 de la gorge 24.

Afin de bien appliquer sur la face 32 l'anneau 22 en état de forte contrainte, et tel qu'illustré sur la figure 9, le dispositif d'étanchéité 10 possède une cale 90 annulaire interposée entre les moyens élastiques 82 et l'anneau 22. La gorge 24 possède une dimension axiale H entre ses face 32 et 34 supérieure à la dimension axiale hors tout de l'anneau 22, et la cale 90 est disposée entre la face 34 et l'anneau 22, de telle manière que l'ensemble cale 90 et anneau 22 est sensiblement ajusté dans la gorge 24.

La cale 90 est par exemple de section rectangulaire ou carrée.

La cale 90 permet de répartir les efforts des moyens élastiques 82 de façon plus homogène sur l'anneau 22 pour assurer un bon contact plan de l'anneau 22 sur la face 32, garant d'une meilleure étanchéité.

De préférence, la force axiale des moyens élastiques 82 est suffisante pour maintenir l'anneau 22 en appui contre la face 32 sur toute la plage de pression de l'enceinte 6, tout en permettant le débattement radial de l'anneau 22.

Pour limiter l'effort exercé par les gaz de l'enceinte 6 sur l'anneau 22, il est souhaitable de limiter le jeu radial entre la surface 12 et la bague 28 à proximité de l'anneau 22. Ce jeu est par exemple de l'ordre de quelques centièmes de millimètre.

Pour limiter au minimum le déplacement axial de l'anneau 22 au cas où l'effort exercé par les gaz dans l'enceinte 6 est supérieure à la précontrainte axiale exercée par les moyens élastiques 82 sur l'anneau 22, le jeu entre les faces 32 et 34 de la gorge et entre l'ensemble anneau 22 et cale 90 est de l'ordre de 0,01 mm.

Si l'effort exercé par les gaz dans l'enceinte 6 est supérieur à la précontrainte axiale exercée par les moyens élastiques 82 sur l'anneau 22, les gaz s'introduisent derrière l'anneau 22 qui passe en étanchéité autoclave.

Le mode de réalisation de la figure 9 présente donc les avantages de la solution non autoclave avec la sécurité de la solution autoclave en cas de surpression dans l'enceinte 6 surpassant les moyens élastiques 82.

Avantageusement, pour évacuer de l'huile accumulée sur la face 36 de l'anneau 22 pendant des fortes charges du moteur, les moyens élastiques 82 sont tarés pour que l'anneau 22 s'écarte de la face 36 quand la pression des gaz dans l'enceinte approche sa valeur maximale Pmax. Ainsi, l'étanchéité non autoclave passe momentanément en mode autoclave, et l'huile accumulée au-dessus de l'anneau 22 est chassée derrière ce dernier.

Il faut néanmoins noter à cet égard que l'épaisseur identique du film sur toute la course de l'anneau 22 en mode non autoclave évite une épaisseur plus importante du film de lubrification du côté de l'enceinte 8, et limite la quantité d'huile remontée depuis le bas de la surface 12 par rapport au mode autoclave.

En tout état de cause, il est préférable d'augmenter la pression élastique pour éviter les remontées d'huile au prix d'une augmentation des frottements. Le polissage de la surface 12 et de la portée 26 permet de réduire les frottements.

Dans le mode de réalisation de la figure 2, l'anneau 22 est muni d'un chanfrein 46 pour éviter de râcler le film d'huile lors du déplacement de l'anneau 22 en direction de l'enceinte 6.

Dans le mode de réalisation de la figure 9, il est impossible de ménager un chanfrein sans devenir anti autoclave, de sorte que la limite supérieure de la portée 26 se situe dans le plan de la face 32. Ceci évite que la pression des gaz réduise la pression de contact sur la portée 26.

La jupe 18 du piston 2 est de préférence guidée par un patin 56, situé du côté de l'enceinte 8 par rapport à l'anneau 22, présentant un jeu j avec la surface 12 inférieur au porte-à-faux f de l'anneau 22 par rapport à la face 32, et le patin 56 est conçu pour calibrer entre le patin 56 et la surface 12 un film hydrodynamique alimenté en huile par des orifices 98.

Ce jeu j très faible impose un découplage mécanique et thermique du patin 56 et de la partie massive du piston 2 qui définit la chambre de combustion. Pour ce faire, le piston 2 comprend par exemple, tel qu'illustré sur la figure 9, une cavité annulaire 99 délimitée radialement entre le patin 56 et la partie massive du piston 2, la cavité 99 étant alimentée en huile à partir du carter du moteur par des orifices 100.

La cavité 100 communique par les orifices 98 ménagés dans la bague 30 avec l'espace 102 compris entre le patin 56 et l'anneau 22 pour alimenter le film d'huile.

En fonctionnement tous les espaces vides entre l'anneau 22 et le patin 56 sont alimentés en huile de manière permanente.

Dans tous les modes de réalisation, pour limiter les pertes par frottement, il est préférable de limiter la hauteur h de la portée 26. Par ailleurs, la hauteur h doit être suffisante pour assurer l'étanchéité, et garantissant que la pression des gaz dans l'enceinte 6, pendant le temps où elle est appliquée, ne permet pas de chasser le film de lubrification entre la portée 26 et la surface 12. Ceci dépend de l'épaisseur du film et de la rugosité des surfaces en contact (portée 26 et surface 12). Si on considère qu'une hauteur h de 1000 fois l'épaisseur du film est suffisante, une hauteur h comprise entre 0,2 et 1 millimètre convient pour un film compris entre 0,2 et 1 µm.

Dans un exemple de réalisation, la hauteur h est égale à 0,5 mm, le diamètre D de la surface 12 est égal à 80 mm, et une pression élastique de 80 bars est suffisante à assurer l'étanchéité. Dans ce cas, une épaisseur radiale de l'anneau 22 en acier est sensiblement égale à 1,5 mm pour obtenir la pression élastique requise. La section de l'anneau 22 est donc un rectangle de hauteur 0,5 mm et de largeur 1,5 mm.

Dans le mode de réalisation de la figure 9, la cale 90 possède par exemple une section carrée de 1,4 mm de côté.

De manière générale, l'invention concerne un dispositif d'étanchéité pour un piston prévu pour se déplacer en mouvement alternatif de translation rectiligne parallèlement à une direction dans une chambre divisée par le piston en une enceinte haute pression et une enceinte basse pression, du type comprenant :
- une surface de glissement cylindrique circulaire d'axe parallèle à la direction de translation du piston ;
- une gorge torique coaxiale à la surface de glissement, ouverte vers la surface de glissement ;
- l'un de la surface de glissement et de la gorge étant solidaire du piston, et l'autre de la chambre ;
- un anneau d'étanchéité élastique, fermé, reçu de façon étanche dans la gorge, et en contact d'étanchéité avec la surface de glissement, par une portée d'étanchéité, l'anneau étant serré élastiquement sur la surface de glissement ;
dans lequel l'anneau est adapté pour maintenir sur la surface de glissement, un film de lubrifiant présentant une épaisseur de lubrification limite, inférieure à un micromètre.

## Revendications

1. Dispositif d'étanchéité pour un piston (2) pour moteur alternatif à combustion interne ou compresseur alternatif, prévu pour se déplacer en mouvement alternatif de translation rectiligne parallèlement à l'axe (A) d'une surface de glissement (12) cylindrique circulaire d'une chambre (4) divisée par le piston (2) en une enceinte haute pression (6) et une enceinte basse pression (8), du type comprenant :
- une surface de glissement (12) délimitant en partie la chambre (4) ;
- une gorge (24) torique ménagée sur le piston (2), destinée à être coaxiale à la surface de glissement (12) et ouverte vers la surface de glissement (12); et
- un anneau d'étanchéité (22) élastique, fermé, reçu de façon étanche dans la gorge (24), et destiné à être en contact d'étanchéité avec la surface de glissement (12), par une portée d'étanchéité (26) dont le périmètre à l'état libre est légèrement supérieur au périmètre de la surface de glissement (12), de sorte que la surface de glissement (12) impose à l'anneau (22) une déformation élastique permanente de compression qui provoque une pression d'appui sensiblement uniforme entre la portée (26) et la surface de glissement (12) quand l'anneau (22) est serré élastiquement sur cette dernière,
**caractérisé en ce que** l'anneau (22) est conçu pour calibrer un film d'huile de lubrification entre l'anneau (22) et la surface de glissement (12) à une épaisseur de lubrification limite lorsqu'il se déplace de l'enceinte haute pression (6) vers l'enceinte basse pression (8), comprise de préférence entre 0.1 µm et 1 µm.

2. Dispositif selon la revendication 1, **caractérisé en ce qu'**il comprend des moyens pour amener de l'huile de lubrification sur toute la périphérie d'un bord (51) de la portée de l'anneau (22), situé du côté de l'enceinte basse pression (8).

3. Dispositif selon la revendication 1 ou 2, **caractérisé en ce que** l'anneau (22) est ajusté dans la gorge (24) de façon à interdire une déformation axiale de l'anneau (22), et à laisser libre un déplacement radial de l'anneau (22) dans la gorge (24).

4. Dispositif selon la revendication 3, **caractérisé en ce que** la gorge (24) est délimitée axialement par deux surfaces (32, 34) de contact avec l'anneau (22), de forme générale plane, perpendiculaires à l'axe (A) de la surface de glissement (12), la distance axiale entre les deux surfaces de contact (32, 34) étant juste suffisante pour interdire une déformation axiale de l'anneau (22), et laisser libre un déplacement radial de l'anneau (22) dans la gorge (24).

5. Dispositif selon l'une quelconque des revendications précédentes, **caractérisé en ce que** l'épaisseur radiale (E) de l'anneau (22) est comprise entre 1% et 5% du diamètre (D) de la surface de glissement (12), de préférence entre 2% et 5%, et encore de préférence entre 2% et 3%.

6. Dispositif selon l'une quelconque des revendications précédentes **caractérisé en ce que** le rapport entre, d'une part, la différence entre le périmètre de la portée (26) de l'anneau (22) à l'état libre et le périmètre de la surface de glissement (12), et, d'autre part, le périmètre de la surface de glissement (12) est compris entre 1/1000 et 4/1000 dudit périmètre.

7. Dispositif selon l'une quelconque des revendications précédentes, **caractérisé en ce que** la portée (26) de l'anneau (22) est cylindrique.

8. Dispositif selon la revendication 7, **caractérisé en ce que** la dimension axiale (h) de la portée (26) de l'anneau (22) est comprise entre 0,2 et 5 mm, notamment entre 0,5 et 5 mm.

9. Dispositif selon la revendication 7 ou 8, **caractérisé en ce que** la dimension axiale (h) de la portée (26) de l'anneau (22) est comprise entre 0,2 et 0,5 mm.

10. Dispositif selon l'une quelconques des revendications 7 à 9, **caractérisé en ce que** le rapport de la dimension axiale (h) de la portée (26) de l'anneau (22) au diamètre (D) de la surface de glissement (12) est compris entre 1/100 et 3/100.

11. Dispositif selon l'une quelconques des revendications 7 à 10, **caractérisé en ce que** le rapport de la dimension axiale (h) de la portée (26) de l'anneau (22) au diamètre (D) de la surface de glissement (12) est compris entre 2/1000 et 1/100.

12. Dispositif selon l'une quelconque des revendications précédentes, **caractérisé en ce que** l'anneau (22) comprend une surface (50) de raclage de la couche d'huile recouvrant la partie de la surface de glissement (12) située dans l'enceinte basse pression (8), cette surface (50) rejoignant la portée (26) de l'anneau (22) en formant une arête vive (51) côté basse pression limitant la portée (26) du côté de l'enceinte basse pression (8).

13. Dispositif selon la revendication 12, **caractérisé en ce que** la surface (50) de raclage rejoint la portée (26) avec un angle côté basse pression compris entre 45 et 90° avec ledit axe (A), de façon à laisser un film d'huile de lubrification limite d'une épaisseur d'une fraction de micromètre sur la partie de la surface de glissement (12) située dans l'enceinte haute pression (6).

14. Dispositif selon l'une quelconque des revendications précédentes, **caractérisé en ce que** la portée (26) de l'anneau (22) est prolongée du coté de l'enceinte haute pression (6) par un tronçon (46) s'écartant progressivement de la surface de glissement (12) jusqu'à une arête vive côté haute pression (49) limitant le tronçon (46) du côté de l'enceinte haute pression, formée avec une surface (36) de l'anneau (22) de raclage des particules, ladite arête vive (49) étant éloignée d'une fraction de micromètre de la surface de glissement (12).

15. Dispositif selon l'une quelconque des revendications précédentes, **caractérisé en ce que** la surface de glissement (12) est polie pour faire disparaître tout relief supérieur à l'épaisseur du film d'huile de lubrification limite.

16. Piston selon l'une quelconque des revendications précédentes, **caractérisé en ce que** l'anneau (22) comprend une face de forme générale plane perpendiculaire à l'axe (A) de la surface de glissement (12), en contact avec la face (34) de forme générale plane de la gorge (24) située du coté de l'enceinte basse pression (8).

17. Dispositif selon la revendication 16, **caractérisé en ce qu'**il comprend un joint torique (40) en matériau élastomère en contact permanent avec le fond (42) de la gorge (24), avec la face (44) de l'anneau (22) en vis-à-vis du fond (42) de la gorge (24), et avec une face (34) de forme générale plane de la gorge (34) située du côté de l'enceinte basse pression (8).

18. Dispositif selon la revendication 16, **caractérisé en ce qu'**il comprend un joint torique (40) en matériau élastomère, solidaire de l'anneau (22), qui occupe la totalité de l'angle formé par la face (44) de l'anneau (22) en vis-à-vis avec le fond (42) de la gorge (24) et la face (34) de forme générale plane de la gorge (34) située du coté de l'enceinte basse pression (8).

19. Dispositif selon la revendication 16, **caractérisé en ce qu'**il comprend un anneau auxiliaire élastique (72) maintenu en contact étanche avec une face d'étanchéité plane (36) de l'anneau d'étanchéité (22), perpendiculaire à l'axe (A) de la surface de glissement (12), située du côté de l'enceinte haute pression (6), du fait de son serrage contre une surface d'étanchéité (74) de la gorge (24) sensiblement conique, ouverte vers l'enceinte haute pression (6).

20. Dispositif selon la revendication 19, **caractérisé en ce que** l'anneau auxiliaire (72) est en contact avec l'anneau d'étanchéité (22) dans un plan destiné à être perpendiculaire à l'axe (A) de la surface de glissement (12), situé dans le plan ou du côté basse pression d'un bord de la portée (26) de l'anneau d'étanchéité (22) situé du côté de l'enceinte haute pression (6).

21. Dispositif selon l'une quelconque des revendications précédentes, **caractérisé en ce que** la gorge (24) est délimitée par une face côté haute pression (32) plane **perpendiculaire à l'axe A**, et **en ce qu'**il comprend des moyens élastiques (82) pour appliquer la face côté haute pression (36) de l'anneau (22) axialement contre la face côté haute pression (32) de la gorge (24).

22. Dispositif selon la revendication 21, **caractérisé en ce qu'**il comprend une cale (90) annulaire disposée entre les moyens élastiques (82) et l'anneau (22).

23. Dispositif selon la revendication 22, **caractérisé en ce que** l'ensemble formé par l'anneau (22) et la cale (90) est ajusté axialement dans la gorge (24).

24. Ensemble pour moteur alternatif à combustion interne ou compresseur alternatif, comprenant au moins une chambre (4) possédant une surface de glissement (12) cylindrique circulaire, un piston prévu pour se déplacer en mouvement alternatif de translation rectiligne parallèlement à l'axe (A) de la surface de glissement (12) en divisant la chambre (4) en une enceinte haute pression (6) et une enceinte basse pression (8), **caractérisé en ce qu'**il comporte un dispositif d'étanchéité entre le piston (2) et la surface de glissement (12) selon l'une quelconque des revendications précédentes.

25. Ensemble selon la revendication 24, **caractérisé en ce que** le piston (2) délimite, dans l'enceinte haute pression (6), un espace annulaire situé radialement entre le piston (2) et la surface de glissement (12), et axialement entre l'anneau d'étanchéité (22) et l'extrémité axiale (75) du piston (22), ledit espace (76) possédant un volume suffisant pour qu'une masse de gaz contenue dans ledit espace (76) à une pression minimale du cycle dans l'enceinte haute pression (6) occupe un volume suffisant pour immerger totalement la partie de l'anneau d'étanchéité (22) exposée à la haute pression lorsque la dite masse de gaz est comprimée à la pression maximale du cycle dans l'enceinte haute pression (6).

26. Ensemble selon la revendication 24 ou 25, **caractérisé en ce que** le piston (2) comporte au moins un patin (56) de guidage annulaire et fermé, délimitant axialement avec l'anneau d'étanchéité (22), et radialement avec la surface de glissement (12), un espace annulaire (60, 62) fermé communiquant avec des moyens d'alimentation (64, 66) en huile fraîche, et s'évacuant dans un circuit de refroidissement (68, 70) du piston (2) débouchant dans l'enceinte basse pression (8).

27. Ensemble selon la revendication 26, **caractérisé en ce que** la surface de glissement (12) est uniquement refroidie par une réserve d'huile fraîche portée par le piston (2) dans l'espace (60, 62) formé entre le patin (56) et l'anneau d'étanchéité (22).
